# EUROPÄISCHE PATENTSCHRIFT

(11) **EP 1 829 749 B1**
(45) Veröffentlichungstag und Bekanntmachung des Hinweises auf die Patenterteilung: **22.12.2010**
(21) Anmeldenummer: 07000838.8
(22) Anmeldetag: 17.01.2007
(51) Int. Cl.: B60R 11/02

(54) **Geräteträger mit biegbarem austauschbarem Tragarm**
Device holder with flexible replaceable support arm
Support d'appareil doté d'un bras de support échan

(30) Priorität: 04.03.2006 DE 202006003411 U
(43) Veröffentlichungstag der Anmeldung: 05.09.2007
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- EP-A- 0 822 037
- DE-U1- 20 000 876
- DE-U1- 20 301 837
- DE-U1- 29 703 527
- DE-U1- 29 912 772
- US-A- 5 465 932
- US-A- 5 810 306
- US-B1- 6 315 252

## Beschreibung

Die Erfindung betrifft einen Geräteträger zur Verwendung beispielsweise in Kraftfahrzeugen zur dauernden oder zeitweiligen Halterung eines Geräts wie beispielsweise eines Mobiltelefons, eines Navigationsgeräts oder dgl., wobei der Geräteträger aus einem Befestigungsteil wie beispielsweise einem Saugermechanismus zum Anbringen an einer glatten Fläche wie beispielsweise der Windschutzscheibe oder mit einer beispielsweise an einer Konsole anschraubbaren Sockelplatte, weiter aus einem Gerätehalter zur Aufnahme und Fixierung des betreffenden Geräts, und aus einem zwischen dem Befestigungsteil und dem Gerätehalter verlaufenden biegsamen Tragarm besteht, so dass durch entsprechendes Biegen des Tragarms der Gerätehalter in die vom Benutzer gewünschte optimale Gebrauchsposition orientierbar ist.

Solche Gerätehalter sind bereits bekannt, beispielsweise aus dem deutschen Gebrauchsmuster 295 13 581, oder aus dem deutschen Gebrauchsmuster 20 2004 010 768. Bei derartigen Geräteträgern wird besonderes Augenmerk auf die zuverlässige und feste Verbindung zwischen dem biegsamen Stab, üblicherweise als Schwanenhals bezeichnet, und dem Fuß einerseits sowie dem Gerätehalter andererseits gelegt, da auf diese Verbindungen beim Einstellen des Geräteträgers erhebliche Kräfte wirken. Denn der Schwanenhals ist zwar biegsam, aber nur unter Aufwendung erheblicher Kraft, da er im normalen Betrieb sich starr verhalten soll und keinesfalls aufgrund von im Betrieb auftretenden Erschütterungen in seiner Position verändert werden soll.

Bei den bekannten Geräteträgern dieser Art findet die Verbindung zwischen dem biegsamen Stab und dem Fuß bzw. dem Gerätehalter durch Verkleben und weitere Sicherungsmaßnahmen statt.

DE 299 12 772 U zeigt einen gattungsgemäßen Geräteträger.

Aufgabe der Erfindung ist es, einen solchen Geräteträger im Hinblick auf seine Einsetzbarkeit und Handhabbarkeit noch weiter zu verbessern.

Dazu ist ein Geräteträger der beschriebenen Art erfindungsgemäß so ausgebildet, dass der Schwanenhals lösbar am Fuß und am Gerätehalter befestigt ist, was den Vorteil bringt, dass Schwanenhälse unterschiedlicher Länge bereitgehalten werden können und der Benutzer dann unter diesem Sortiment die jeweils passende Länge wählen kann. Bisher werden solche Geräteträger zwar mit unterschiedlichen Schwanenhalslängen hergestellt, aber dabei ist der Schwanenhals stets fest und unlösbar mit dem Fuß und dem Gerätehalter verbunden.

Die Verbindung des Schwanenhalses mit dem Fuß bzw. mit dem Gerätehalter erfolgt jeweils in Gestalt einer formschlüssig drehfesten Steckverbindung zwischen dem biegsamen-Stab bzw. dessen jeweiligem Endstück und dem Fuß bzw. dem Gerätehalter, und mittels einer Arretierung durch eine auf dem jeweiligen Ende des biegsamen Stabs sitzende Arretierhülse, die in Gestalt einer Schraubverbindung, einer Bajonettverriegelung oder sonstige durch relative Drehung herstellbare Verriegelung bzw. Entriegelung mit dem Fuß bzw. dem Gerätehalter zusammenwirkt.

Ein Ausführungsbeispiel der Erfindung ist in den Zeichnungen dargestellt und wird im folgenden mehr im einzelnen erläutert.

In den Zeichnungen zeigt:
- Fig. 1: eine perspektivische Darstellung eines Geräteträgers nach der Erfindung,
- Fig. 2: einen Längsschnitt durch den Geräteträger nach Fig. 1,
- Fig. 3: eine perspektivische Darstellung des Fußes und des davon getrennten unteren Endes des Schwanenhalses des Geräteträgers nach Fig. 1, und
- Fig. 4: eine auseinandergezogene geschnittene Darstellung der Anordnung nach Fig. 3.

Die Zeichnungen zeigen ein Ausführungsbeispiel des erfindungsgemäßen Gerätsträgers mit einem Fuß 1, einem Kopf 2 und einem dazwischen verlaufenden Schwanenhals 3, der mittels jeweils einer Kombination aus Steckverbindung und Bajonettverriegelung lösbar mit dem Fuß 1 bzw. dem Kopf 2 verbindbar ist.

Der Fuß 1 weist ein Saugergehäuse 11, eine dieses unten abschließende Saugermembran 12 und einen Saugerbetätigungsmechanismus auf, von welchem der Betätigungshebel 13 deutlich sichtbar ist, der über einen Schaft mit der Saugermembran verbunden ist. Außerdem ist am Fußgehäuse 11 eine Anschlusssäule 14 für den Anschluß des Schwanenhalses 3 angeordnet.

Der Kopf 2 besteht aus einer Montageplatte 21, die mittels Schnellkupplungselementen 22 mit einem Gerätehalter, beispielsweise einem PDA-Halter mit verstellbaren Klemmbacken, oder gegebenenfalls unmittelbar mit dem Gehäuse eines Geräts kuppelbar ist, und einem mit der Montageplatte 21 verbundenen Anschlusskörper 23 zum Anschluß des Schwanenhalses 3.

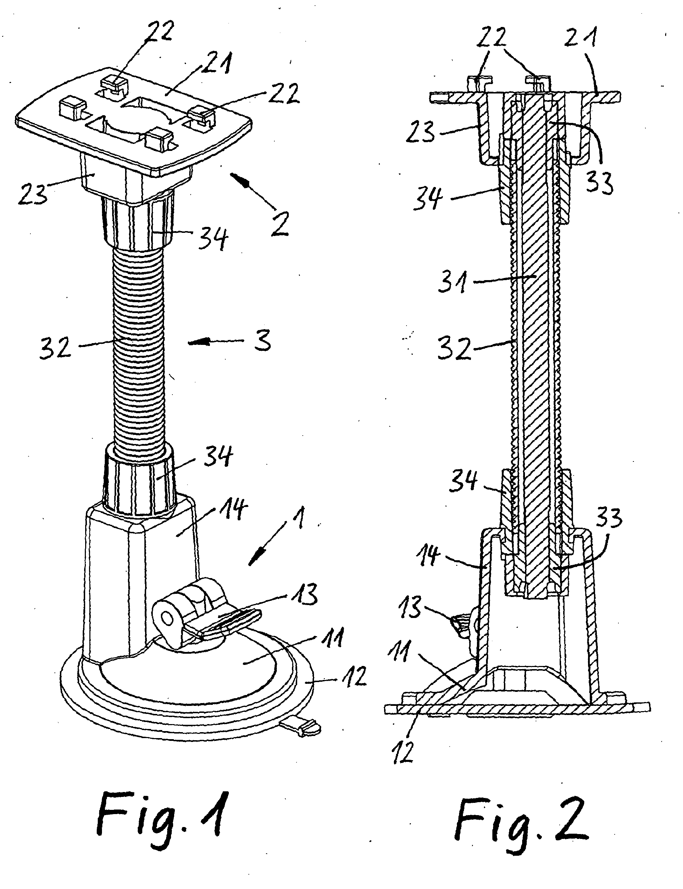

Der in Fig. 1 perspektivisch dargestellte Geräteträger ist in Fig. 2 im Schnitt dargestellt. Aus Fig. 2 ist auch der Aufbau des Schwanenhalses 3 erkennbar, der in üblicherweise aus einem biegsamen Metallstab 31, einem diesen lose umschließenden biegeelastischen Mantel 32, der beispielsweise als Kunststoffwellschlauch ausgebildet ist und in erster Linie der Verkleidung des Metallstabs dient, und aus an beiden Enden angeordneten Anschlussstücken 33 und Bajonettverriegelungshülsen 34 besteht.

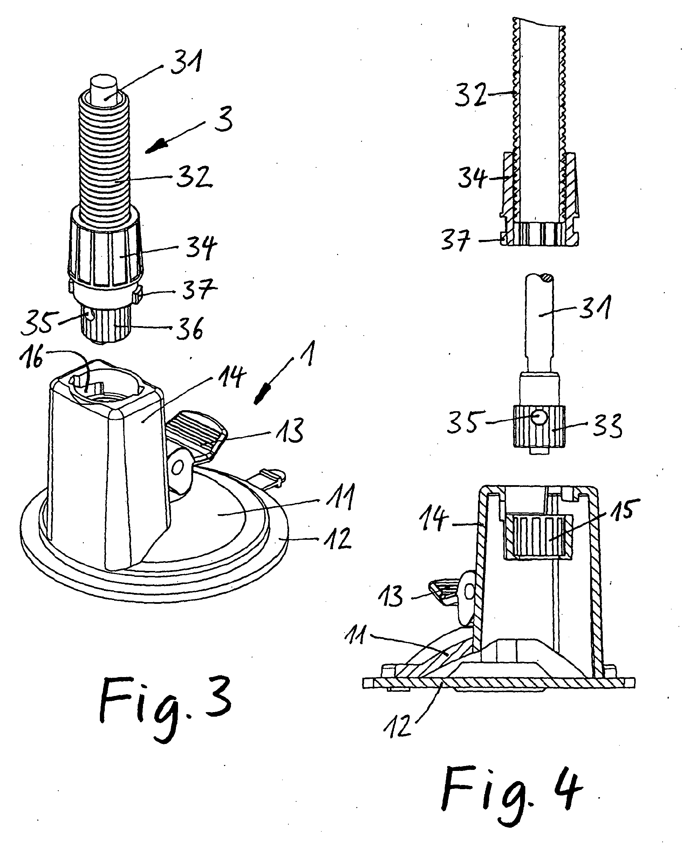

Die Ausbildung der Kupplungsverbindung zwischen dem jeweiligen Ende des Schwanenhalses 3 und dem Fuß 1 bzw. dem Kopf 2 ist aus den Fig. 3 und 4 in näheren Einzelheiten am Beispiel der Verbindung mit dem Fuß 1 dargestellt. Dabei zeigt Fig. 3 den Fuß mit dem davon gelösten und etwas beabstandeten Ende des Schwanenhalses 3 in perspektivischer Darstellung und Fig. 4 die Anordnung im Schnitt, wobei außerdem die Bauteile des Schwanenhalses 3 auseinandergezogen dargestellt sind, um Anordnung und Ausbildung von Anschlussstück 33 und Bajonettverriegelungshülse 34 deutlicher zu zeigen.

Das Anschlussstück 33 ist auf das jeweilige Ende des Metallstabs 31 aufgesetzt und besteht wie der Fuß und der Kopf des Geräteträgers zweckmäßigerweise aus Kunststoff. Anschlußstück 33 und Metallstab 31 sind dabei drehfest miteinander verbunden, vorzugsweise durch eine Formschlussverbindung zwischen dem Querschnitt des Metallstabendes und der entsprechenden Aufnahmeöffnung des Anschlussstücks 33, und/oder durch einen Querstift, der durch das Anschlussstück 33 und dem Metallstab 31 verläuft. Der Querstift kann diametral gegenüberliegende, radial vorspringende Nasen 35 am Anschlussstück bilden, oder, falls kein Querstift vorgesehen ist, können angeformte radiale Vorsprünge 35 vorzugsweise an radial gegenüberliegenden Stellen des Anschlussstücks 33 angeformt sein, die als Anschläge mit der vorderen Stirnfläche der Bajonettverriegelungshülse 34 zusammenwirken.

Der untere Teil des Anschlussstücks 33 ist mit einer äußeren Profilierung 36 ausgebildet, die mit einer inneren Profilierung 15 in der Anschlusssäule 14 des Fußes 1 bzw. im Anschlusskörper 23 des Kopfs 2 als Drehsicherung formschlüssig zusammenwirkt. Es ist auch möglich, die Nasen bzw. Vorsprünge 35 im Zusammenwirken mit entsprechenden axialen Nuten im Gegenelement des Fußes 1 bzw. des Kopfs 2 als Drehsicherung zu benutzen.

Die Bajonettverriegelungshülse 34 sitzt lose auf dem Mantel 32 und hat radial vorspringende Bajonettnasen 37, die mit entsprechenden Bajonettschlitzen 16 (in Fig. 3 sichtbar) zusammenwirken.

Die Kupplung des Schwanenhalses mit dem Fuß bzw. Kopf erfolgt jeweils in der Weise, dass das Anschlussstück 33 in das Gegenelement des Fußes bzw. des Kopfs eingesteckt wird und drehsichernd formschlüssig damit zusammenwirkt, und in dem es dann in seiner Position durch die Bajonettverriegelungshülse 34 verriegelt wird. Diese drückt mit ihrer unteren Stirnfläche gegen die radialen Vorsprünge 35 des Anschlussstücks 33, so dass dieses axial in seiner Position gesichert ist, und werden dann durch Drehen mit dem Gegenelement des Fußes bzw. des Kopfs bajonettverriegelt.

Es versteht sich, wie schon eingangs erwähnt, dass statt einer Bajonettverriegelungshülse auch eine Schraubhülse oder ein anderes gleichwirkendes Verriegelungselement vorgesehen sein kann.

Die Ausbildung der Kupplungselemente, also Anschlussstück 33 und Bajonettverriegelungshülse 34 oder sonstige Verriegelungshülse, ist an beiden Enden des Schwanenhalses 3 gleich ausgebildet, und die Gegenelemente im Fuß 1 und im Kopf 2 sind ebenfalls identisch, so dass nicht auf die Orientierung des Schwanenhalses bei der Montage geachtet werden muß.

Aufgrund dieser Ausbildung des Geräteträgers kann der Schwanenhals zwischen Fuß und Kopf leicht ausgetauscht werden, so dass für jeden Gebrauchszweck oder jede Befestigungssituation aus einem Sortiment verfügbarer Schwanenhalslängen der richtige Schwanenhals zwischen Fuß und Kopf eingesetzt werden kann. Dies ermöglicht ein Baukastensystem von Geräteträgers mit verschiedenen Schwanenhälsen, was die Lagerhaltung wesentlich vereinfacht und verbilligt, weil nicht komplette Schwanenhälse aller möglicher Längen vorgehalten werden müssen, sondern lediglich ein Sortiment von Schwanenhälsen verschiedener Länge vorgehalten werden muß, die dann nach Bedarf mit Kopf und Fuß kombinierbar sind, oder es können Geräteträger mit mehreren unterschiedlich langen Schwanenhälsen als Einheit verkauft werden, so dass der Kunde seinen Geräteträger je nach Bedarf anpassen kann und den Schwanenhals nach Bedarf auch austauschen kann.

Wenn der Kopf lediglich als sehr einfaches Anschlussteil für einen Gerätehalter ausgebildet ist, kann der gleiche Erfolg auch dadurch erzielt werden, dass der einfache Kopf fest mit dem einen Ende des Schwanenhalses frei verbunden ist und die lösbare Kupplung nur zwischen dem anderen Ende des Schwanenhalses und dem Fuß vorgesehen ist. Die lösbare Kupplung zwischen Schwanenhals und sowohl dem Fuß als auch dem Kopf hat aber noch den zusätzlichen Vorteil, dass auch der Kopf beliebig austauschbar ist, d.h. verschiedene wahlweise zu benutzende Köpfe mit unterschiedlichen Anschlußkonfigurationen für Gerätehalter oder Geräte verschiedener Hersteller vorgehalten werden können.

## Patentansprüche

1. Geräteträger für Kleincomputer, Navigationsgeräte, Mobiltelefone und dgl., bestehend aus einem Fuß (1) mit einem Sauger mechanismus, einem Kopf (2) zum Anbringen eines Gerätehalters oder des Geräts, und einem den Kopf mit dem Fuß verbindenden biegsamen Arm (3), wobei
der biegsame Arm (3) mindestens mit dem Fuß (1) durch eine formschlüssig drehfeste (36, 15) Steckverbindung mit einem Anschlussteil (14, 23) des Fußes (1) bzw. des Kopfs (2) lösbar kuppelbar ist,
**dadurch gekennzeichnet, dass**
die Steckverdindung mittels einer als Bajonettverriegelungshülse oder Schraubhülse ausgebildeten Arretierungshülse (34) in der Einsteckposition gesichert ist, wobei die Arretierungshülse (34) auf dem Ende des biegsamen Arms (3) sitzt.

2. Geräteträger nach Anspruch 1, wobei der biegsame Arm (3) sowohl mit dem Fuß (1) als auch mit dem Kopf (2) lösbar kuppelbar ist.

3. Geräteträger nach Anspruch 2, wobei die Steckverbindungs- und Arretierorgane (33, 34) an beiden Enden des biegsamen Arms (3) in Größe und Konfiguration identisch ausgebildet sind.

4. Geräteträger nach einem der Ansprüche 1 bis 4, wobei die Steckverbindung ein am Ende des biegsamen Arms (3) angeordnetes Steckelement, das an seinem Umfang mit einem Formschlussprofil (36) oder radialen Nasen (35) versehen ist, und einer in einem Anschlussteil (14, 23) des Fußes (1) bzw. des Kopfs (2) gebildeten Steckbuchse mit komplementären Formschlusselementen gebildet ist.

5. Geräteträger nach einem der Ansprüche 1 bis 4, wobei die als Bajonettverriegelungshülse oder Schraubhülse ausgebildete Arretierungshülse (34) mit Bajonettelementen (16) oder einem Gegengewinde am Anschlussteil (14, 23) des Fußes (1) bzw. des Kopfs (2) sowie über eine axiale Formschlussverbindung (35) mit dem betreffenden Ende des biegsamen Arms zusammenwirkt.

## Claims

1. A device mount for small computers, navigation devices, mobile telephones and the like, which consists of a foot (1) with a suction mechanism, a head (2) for mounting a device holder or the device, and a flexible arm (3) connecting the head to the foot, wherein the flexible arm (3) can be detachably coupled at least to the foot (1) by means of a form-fitting and rotationally fixed (36, 15) plug connection with a connection piece (14, 23) of the foot (1) or the head (2),
**characterized in that**
the plug connection is secured in the plugged position by means of a locking sleeve (34) configured as a bayonet-type locking sleeve or a threaded sleeve, the locking sleeve (34) sitting on the end of the flexible arm (3).

2. The device mount according to claim 1, wherein the flexible arm (3) can be detachably coupled to the foot (1) as well as to the head (2).

3. The device mount according to claim 2, wherein the plug connection and locking members (33, 34) on both ends of the flexible arm (3) are formed identically in size and configuration.

4. The device mount according to any one of claims 1 to 3, wherein the plug connection is configured as a plug member that is arranged on the end of the flexible arm (3) and is provided with a form-fitting profile (36) or radial noses (35) on its circumference, and a plug socket formed in a connection piece (14, 23) of the foot (1) or the head (2) and having complementary form-fitting elements.

5. The device mount according to any one of claims 1 to 4, wherein the locking sleeve (34) that is configured as a bayonet-type locking sleeve or threaded sleeve interacts with bayonet members (16) or a counter thread on the connection piece (14, 23) of the head (1) or the foot (2) as well as with the respective end of the flexible arm by means of a form-fitting axial connection (35).

## Revendications

1. Support d'appareil pour mini-ordinateurs, appareils de navigation, téléphones mobiles et similaires, comprenant un pied (1) muni d'un mécanisme d'aspiration, une tête (2) destinée à fixer un porte-appareil ou l'appareil, et un bras (3) flexible reliant la tête au pied, le bras (3) flexible pouvant être accouplé de manière séparable au moins avec le pied (1) par un assemblage à emboîtement solidaire résistant à la rotation (36, 15) avec une pièce de raccordement (14, 23) du pied (1), respectivement de la tête (2),
**caractérisé en ce que**
l'assemblage à emboîtement est bloqué dans la position d'emboîtement au moyen d'une douille d'arrêt (34) réalisée sous la forme de douille de verrouillage à baïonnette ou de douille à vis, la douille d'arrêt (34) étant située sur l'extrémité du bras (3) flexible.

2. Support d'appareil selon la revendication 1, le bras (3) flexible pouvant être accouplé de manière séparable aussi bien avec le pied (1) qu'avec la tête (2).

3. Support d'appareil selon la revendication 2, les organes d'assemblage à emboîtement et d'arrêt (33, 34) étant réalisés de manière identique en taille et en configuration aux deux extrémités du bras (3) flexible.

4. Support d'appareil selon l'une des revendications 1 à 3, l'assemblage à emboîtement étant formé d'un élément d'emboîtement disposé à l'extrémité du bras (3) flexible, muni sur sa circonférence d'un profil de liaison solidaire (36) ou d'ergots radiaux (35), et d'une douille d'emboîtement avec des éléments de liaison solidaire complémentaires formée dans une pièce de raccordement (14, 23) du pied (1), respectivement de la tête (2).

5. Support d'appareil selon l'une des revendications 1 à 4, la douille d'arrêt (34) réalisée sous la forme de douille de verrouillage à baïonnette ou de douille à vis coopérant avec l'extrémité concernée du bras flexible par des éléments à baïonnette (16) ou un filetage inverse sur la pièce de raccordement (14, 23) du pied (1), respectivement de la tête (2), ainsi que par l'intermédiaire d'un assemblage solidaire axial (35).
